# EUROPÄISCHE PATENTSCHRIFT

(11) **EP 0 648 696 B1**
(45) Veröffentlichungstag und Bekanntmachung des Hinweises auf die Patenterteilung: **17.10.2001**
(21) Anmeldenummer: 94115777.8
(22) Anmeldetag: 06.10.1994
(51) Int. Cl.: B65G 47/52

(54) **Vorrichtung zum Ein- und Ausschleusen von Gegenständen bei Transportstrecken**
Apparatus for transferring articles between conveyors
Dispositif pour transférer des objets sur des voies de transport

(30) Priorität: 15.10.1993 DE 4335196
(43) Veröffentlichungstag der Anmeldung: 19.04.1995
(73) Patentinhaber: ALTRATEC MONTAGESYSTEME GmbH, D-71701 Schwieberdingen (DE)
(72) Erfinder: Hauf, Hans, 71701 Schwieberdingen (DE)
(74) Vertreter: Jeck, Anton, Dipl.-Ing.

(56) Entgegenhaltungen:
- DE-A- 3 624 411
- DE-A- 4 023 667
- US-A- 3 567 002
- US-A- 4 609 092

## Beschreibung

Die Erfindung betrifft eine Vorrichtung zum Ein- und Ausschleusen bzw. Umlenken von Gegenständen bei Transportstrecken gemäß dem Oberbegriff des Anspruchs 1.

Bei herkömmlichen Transportstrecken sind Aus- und Einschleusvorrichtungen vorgesehen, die vertikale Hin- und Herbewegungen ausüben können und die Gegenstände von der einen Förderbahn auf die andere befördern. Dabei sind die Lastförderorgane des abgehenden Förderers quer zu den Lastförderorganen des ankommenden Förderers ausgerichtet. Um die Transportrichtung der transportierten Gegenstände, regelmäßig Werkstücke, zu ändern, muß die herkömmliche Vorrichtung Einrichtungen vorsehen, die zwei Bewegungsabläufe in unterschiedlicher Höhe der Vorrichtung erlauben. Dies alles macht die Vorrichtung im Aufbau aufwendig und setzt zudem einen Mechanismus vorraus, der auf die Lastförderorgane der Förderer abgestimmt sein muß.

Aus der WO-A-9 221 594 ist ein Förderer von Gegenständen bekannt, der mit einer endlosen Lastförderfläche und mit mindestens einer Ausschleuseinrichtung versehen ist, durch die die Gegenstände von der Lastförderfläche entnehmbar bzw. auf diese bringbar sind. Die Ausschleuseinrichtung weist einen in die Lastförderfläche der Gegenstände hineinragenden Drehteller und mindestens eine Weiche auf, durch die die Werkstücke von der Lastfläche auf den Drehteller bringbar sind. Der Drehteller ist nicht innerhalb der Transportstrecke angeordnet, sondern greift vielmehr in diese ein. Die Weiche hat in einer zweiten ihrer beiden Positionen den Verlauf einer Sekante. Die Schwenkachse des Drehtellers und die Schwenkachse der Weiche verlaufen parallel.

Ausgehend von dem obigen Stand der Technik Liegt der Erfindung die Aufgabe zugrunde, hier Abhilfe zu schaffen und eine Vorrichtung zum Ein- und Ausschleusen bzw. Umlenken von Gegenständen vorzuschlagen, so daß das Überführen der Gegenstände von einem Förderer auf den anderen bzw. eine Änderung der Transportrichtung der Werkstücke innerhalb einer Transportstrecke mit einfachen Mitteln durchführbar ist.

Die gestellte Aufgabe wird erfindungsgemäß durch die kennzeichnenden Merkmale des Anspruches 1 gelöst.

Man erkennt, daß die Erfindung jedenfalls dann verwirklicht ist, wenn es sich bei der Vorrichtung um einen Drehteller mit Weichen handelt, die während des Betriebes der Transportstrecke unterschiedliche Positionen einnehmen können, so daß die Werkstücke von einem Förderer auf den Drehteller gelangen und von dort auf einen weiteren Förderer weitergeleitet werden können. Der Drehteller kann selbstverständlich auch Teil eines Förderers bzw. einer Transportstrecke sein, durch den bzw. die die Bewegungsrichtung der Werkstücke um 180° geändert wird.

Weitere zweckmäßige und vorteilhafte Ausgestaltungen der Erfindung gehen aus den Unteransprüchen hervor.

Handelt es sich um eine Vorrichtung, deren Grundkörper in Form eines kreisrunden Tellers ausgebildet ist, dann ist zweckmäßig, wenn die Deckseite des Grundkörpers in derselben Ebene liegt wie die Deckseite der Förderer. Dabei ist es vorteilhaft, wenn die Achse des Grundkörpers parallel zur Schwenkachse der Weiche verläuft. Eine weitere zweckmäßige Ausgestaltung der Erfindung sieht vor, daß die Achsen sich vertikal erstrecken und mit Abstand zueinander angeordnet sind, wobei die Schwenkachse außerhalb des Grundkörpers angeordnet ist. Der Lagerkörper der Weiche befindet sich regelmäßig außerhalb des Grundkörpers und wird mittels einer Steuerungseinrichtung betätigt. Durch diese Steuerungseinrichtung wird entschieden, ob und welche Arbeitslage die jeweilige Weiche einnimmt.

Ferner ist vorgesehen, daß der Durchmesser des Grundkörpers mindestens der Breite einer Transportstrecke entspricht. Dadurch ist gewährleistet, daß mit einem einzigen Drehteller, der innerhalb einer Transportstrecke angeordnet sein kann, bewirkt wird, daß die Werkstücke, gelangen sie auf den Drehteller, ihre Bewegungsrichtung um 180° ändern und auf den gegenläufigen Trum des Förderers gelangen.

Eine weitere besonders zweckmäßige Ausgestaltung der Erfindung sieht vor, daß die Anzahl der Weichen in etwa der Anzahl der die Transportstrecken bildenden Förderer-Paare entspricht. Hierdurch ist gewährleistet, daß alle in Betracht kommenden Bewegungsabläufe und -änderungen der Werkstücke verwirklicht werden können.

Bezüglich einer einfachen Änderung der Bewegungsrichtung der Werkstücke ist es zweckmäßig, wenn die in tangentialer Stellung der Weiche dem Grundkörper zugewandte Seite der Weiche bogenförmig ausgebildet ist. Durch diese Maßnahme ist eine kontinuierliche Richtungsänderung der Werkstücke gewährleistet.

Einige Ausführungsbeispiele der Erfindung sind in der Zeichnung schematisch dargestellt und werden im folgenden näher erläutert. Es zeigen
- Fig. 1: einen Teil einer Transportstrecke mit vier Förderern,
- Fig. 2: einen Teil einer anderen Transportstrecke mit zwei Förderern und
- Fig. 3: eine Transportstrecke mit zwei Förderern.

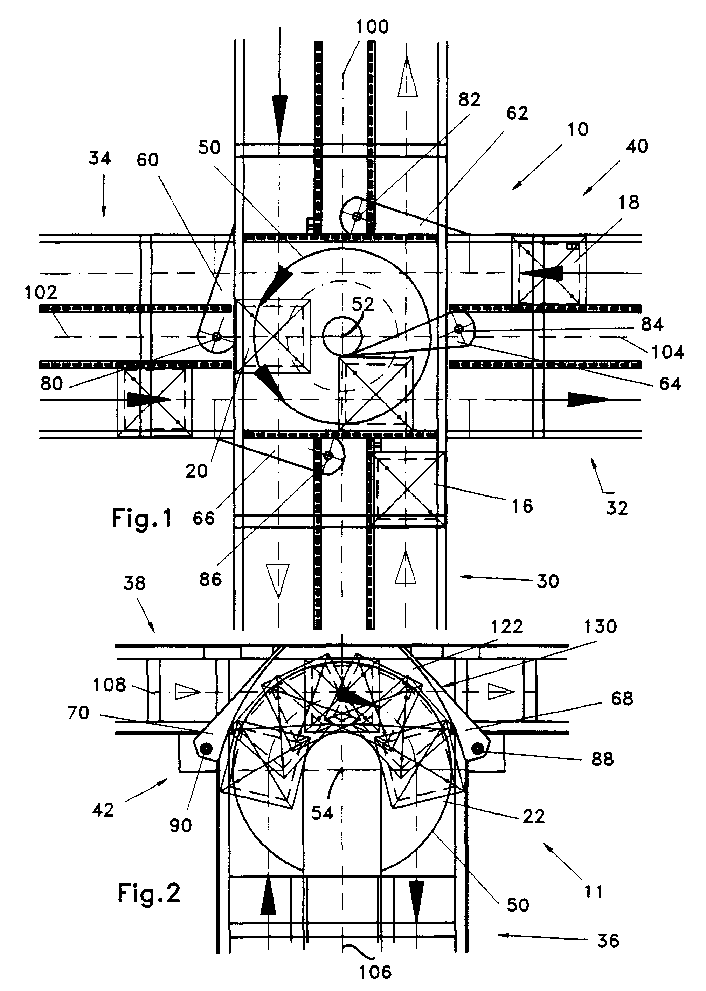

In den Figuren 1 bis 3 ist jeweils eine Vorrichtung 10,11,12,13 zum Ein- und Ausschleusen bzw. Umlenken von Gegenständen 16-26 für Förderer 30-39 aufweisende Transportstrecken 40-46 mit einem scheibenförmigen, in der Höhe der Förderer 30-39 anorderbaren und um jeweils eine Achse 52-58 verdrehbaren Grundkörper dargestellt, der mit mindestens einer die Förderrichtung der Gegenstände 16-26 mitbestimmenden und verschwenkbaren Weiche 60-74 zusammenarbeitet. Die Vorrichtung 10 ist innerhalb der Transportstrecke 40 angeordnet, während sie bei den anderen Vorrichtungen die Stoßstelle zwischen zwei oder mehreren Transportstrecken 42 - 46 bildet. Die Weichen 60-74 sind mit Bezug auf den Grundkörper 50 zwischen einer tangentialen und einer in etwa radialen Arbeitsstellung verschwenkbar. Ferner ist zu erkennen, daß die Deckseite des Grundkörpers 50 in derselben Ebene liegt wie die Deckseite der Förderer 30-39. Jede Weiche ist um ihre jeweilige vertikale Achse 80-94 verschwenkbar, wobei diese Achsen parallel zur jeweiligen Achse 52-58 des Grundkörpers 50 verlaufen. Die Achsen 52-58 bzw. 80-94 erstrecken sich vertikal und sind mit Abstand zueinander angeordnet, wobei die Schwenkachsen 88-94 außerhalb des Grundkörpers 50 angeordnet sind. Dabei ist der Durchmesser des Grundkörpers 50 so bemessen, daß er mindestens der Breite einer Transportstrecke entspricht. Bei den Vorrichtungen nach den Figuren 1, 2 und 3 ist der jeweilige Grundkörper 50 so angeordnet, daß seine Achse die Mittelachse 100-106, 114 der jeweiligen Transportstrecke 40, 42, 46 schneidet.

Bei den Ausführungformen nach den Figuren 1,2 und 3 entspricht die Anzahl der Weichen der Anzahl der die Transportstrecke bildenden Förderer-Paare. Die Weichen 68, 70, 74 sind ferner so bemessen, daß deren dem Grundkörper 50 zugewandten Seiten 122 bogenförmig ausgebildet sind. Dabei ist der Krümmungsradius der Weichen so bemessen, daß er dem Krümmungsradius des Grundkörpers 50 entspricht. Die gegenüberliegenden Seiten 130 der Weichen 68, 70 sind in etwa geradlinig ausgebildet.

Die in Figur 1 dargestellte Transportstrecke besteht aus einem endlosen Hauptförderer 30, an den zwei endlose Nebenförderer 32,34 angeschlossen sind. Das Werkstück 16 bewegt sich in Richtung des Pfeiles und gelangt auf den Drehteller 50. Die Weiche 64 ist hier so eingestellt, daß das Werkstück 16 vom Drehteller 50 auf den Nebenförderer 32 gelangen kann. Auf den Nebenförderer 32 könnte das Werkstück 16 auch anders gelangen, indem es zunächst auf dem Drehteler 50 um 360° verdreht und sodann auf den Förderer 32 weitergeleitet wird. Das Werkstück macht also eine "Ehrenrunde". Schließlich wäre es auch möglich, das Werkstück zunächst auf den Förderer 34, dann wieder auf den Drehteller 50 und von dort aus auf den Förderer 32 zu überführen. Wäre die Weiche 64 um 90° verschwenkt, dann gelangt das Werkstück 16 bis zur Weiche 62 und von dort aus bewegt es sich in Richtung auf den Nebenförderer 34. Man erkennt, daß die Weichen 60-66 unterschiedliche Arbeitspositionen einnehmen können, so daß das Werkstück 16 problemlos auf jede der Förderbahnen gelangen kann. Es besteht auch die Möglichkeit, die Weichen so einzustellen, daß das Werkstück 16 seine Bewegungsrichtung um 180° ändert und sich sodann in entgegengesetzter Richtung bewegt. Diese Möglichkeiten bestehen nicht nur beim Werkstück 16, sondern auch beim Werkstück 18 oder anderen Werkstücken, die sich auf einem der Förderer befinden.

Figur 2 zeigt, daß der Drehteller 50 so bemessen ist, daß seine Drehachse 54 die Längsmittelachse 106 schneidet. Zum größten Teil ist der Drehteller 50 innerhalb der Transportstrecke 42 angeordnet, wobei er teilweise in die Bahn des Förderers 38 hineinragt. Dabei sind zwei Weichen 68 und 70 vorgesehen, die zwischen der in Figur 2 dargestellten Arbeitsposition und einer anderen verschwenkbar sind, in der sie in etwa senkrecht zur Längsmittelachse 106 verlaufen. Das Werkstück 22 kann vom Förderer 36 auf den Förderer 38 überführt werden. Das Gleiche gilt auch für Werkstücke, die sich auf dem Förderer 38 befinden und durch den Drehteller 50 auf den Förderer 36 überführt werden. Erstrecken sich die Weichen 68 und 70 in etwa senkrecht zur Längsmittelachse 106, dann ändern die auf dem Förderer 38 sich befindenden Werkstücke nicht ihre Bewegungsrichtung.

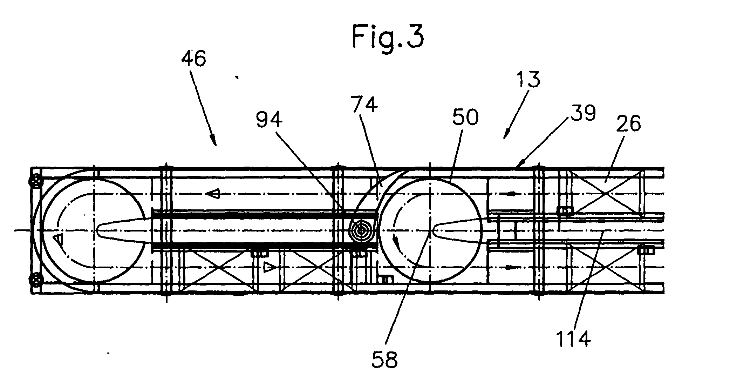

Die in Figur 3 dargestellte Vorrichtung ist bei einem Förderer mit einer einzigen Transportstrecke eingesetzt und dient zur Umlenkung der Transportrichtung der Werkstücke. Es ist eine Weiche vorgesehen, die die Längsmittelachse 114 schneidet und durch die entschieden werden kann, ob die Werkstücke 26 ihre Bewegung im Bereich des Drehtellers 50 beibehalten oder, wie in Figur 3 dargestellt, um 180° verändern.

Die Vorrichtung weist ferner eine nicht näher dargestellte Steuerungseinrichtung sowie eine Antriebseinheit auf, durch welche der Drehteller und die Weichen betätigt werden können.

## Patentansprüche

1. Vorrichtung (10, 11, 13) zum Ein- und Ausschleusen bzw. Umlenken von Gegenständen, die eine von einem Förderpaar (30, 36, 39), das einen hin- und einen zurückführenden Förderer besitzt, gebildete Transportstrecke (40, 42, 46), einen scheibenförmigen, mit seiner Arbeitsfläche in der Höhe der Förderer des Förderpaares anorderbaren und um eine Achse verdrehbaren Grundkörper (50) sowie mindestens eine die Förderrichtung der Gegenstände mitbestimmende und verschwenkbare Weiche (64, 68, 74) aufweist, wobei der Grundkörper (50) derartig gestaltet ist, dass Gegenstände von dem hinführenden Förderer auf den runddrehenden Grundkörper gelangen können, wo sie sich um die Achse so lange drehen, bis die Weiche in die Arbeitsfläche des Grundkörpers etwa radial hineinragt und den Gegenstand ausschleust,
**dadurch gekennzeichnet,**
**dass** ein weiterer Förderer (38) bzw. eine weitere von einem weiteren Förderpaar (32) gebildete Transportstrecke vorgesehen ist, dessen bzw. deren Eingang diese Weiche (64, 68, 74) zugeordnet ist, so dass der Gegenstand auf diesen weiteren Förderer bzw. weitere Transportstrecke ausgeschleust wird, wenn die Weiche in die Arbeitsfläche des Grundkörpers hineinragt, und dass der Gegenstand über den Grundkörper auf den zurückführenden Förderer der ursprünglichen Transportstrecke (40, 42, 46) zurückkehrt, wenn der Gegenstand auf keinen weiteren Förderer transportiert werden soll und die Weiche sich daher in ihrer tangentialen Arbeitsstellung befindet.

2. Vorrichtung nach Anspruch 1,
**dadurch gekennzeichnet,**
**dass** die Achse (52, 54, 58) des Grundkörpers (50) parallel zur Schwenkachse (80 bis 94) der Weiche (64, 68, 74) verläuft.

3. Vorrichtung nach einem der Ansprüche 1 oder 2,
**dadurch gekennzeichnet,**
**dass** die Achsen (52, 54, 58) sich vertikal erstrecken und mit Abstand zueinander angeordnet sind, wobei die Schwenkachsen (84, 88, 94) au-ßerhalb des Grundkörpers (50) angeordnet sind.

4. Vorrichtung nach einem der Ansprüche 1 bis 3,
**dadurch gekennzeichnet,**
**dass** die Achse (52, 54, 58) des Grundkörpers (50) die Mittelachse (100 bis 106, 114) mindestens einer Transportstrecke (40, 42, 46) schneidet oder mittig zwischen zwei Förderern angeordnet ist.

5. Vorrichtung nach einem der Ansprüche 1 bis 4,
**dadurch gekennzeichnet,**
**dass** der Durchmesser des Grundkörpers (50) mindestens der Breite der Transportstrecke (40, 42, 46) entspricht.

6. Vorrichtung nach einem der Ansprüche 1 bis 5,
**dadurch gekennzeichnet,**
**dass** die Anzahl der Weichen (60 bis 70, 74) in etwa der Anzahl der die Transportstrecken bildenden Fördererpaare entspricht.

7. Vorrichtung nach einem der Ansprüche 1 bis 6,
**dadurch gekennzeichnet,**
**dass** die in tangentialer Stellung der Weiche (68, 74) dem Grundkörper (50) zugewandte Seite (122) der Weiche (68, 74) bogenförmig ausgebildet ist.

8. Vorrichtung nach einem der Ansprüche 1 bis 7,
**dadurch gekennzeichnet,**
**dass** der Krümmungsradius der Weiche (68, 74) dem Krümmungsradius des Grundkörpers (50) entspricht.

9. Vorrichtung nach einem der Ansprüche 1 bis 8,
**dadurch gekennzeichnet,**
**dass** die in tangentialer Stellung der Weiche dem Grundkörper (50) abgewandten Seiten (130) der Weichen (68) in etwa geradlinig ausgebildet sind.

## Claims

1. Apparatus (10, 11, 13) for charging and discharging, or respectively deflecting, articles, which apparatus includes a conveyor path (40, 42, 46) formed by a pair of conveyors (30, 36, 39) which has an advancing conveyor and a returning conveyor, a disc-like basic body member (50), which is disposable with its operating area on a level with the conveyors of the pair of conveyors and is rotatable about an axis, as well as at least one pivotable guide means (64, 68, 74), which co-determine the direction of conveyance of the articles, the basic body member (50) being so shaped that articles from the advancing conveyor can pass to the rotating basic body member, where they rotate about the axis until such time as the guide means protrudes substantially radially into the operating area of the basic body member and discharges the article, **characterised in that** an additional conveyor (38), or respectively an additional conveyor path formed by an additional pair of conveyors (32), is provided, this guide means (64, 68, 74) being associated with the inlet of said conveyor or path so that the article is discharged onto this additional conveyor, or respectively additional conveyor path, when the guide means protrudes into the operating area of the basic body member, and **in that** the article returns to the returning conveyor of the original conveyor path (40, 42, 46) via the basic body member when the article is to be transported to no additional conveyor and when the guide means is therefore in its tangential operating position.

2. Apparatus according to claim 1, **characterised in that** the axis (52, 54, 58) of the basic body member (50) extends parallel to the pivotal axis (80 to 94) of the guide means (64, 68, 74).

3. Apparatus according to one of claims 1 or 2, **characterised in that** the axes (52, 54, 58) extend vertically and are spaced from one another, the pivotal axes (84, 88, 94) being disposed externally of the basic body member (50).

4. Apparatus according to one of claims 1 to 3, **characterised in that** the axis (52, 54, 58) of the basic body member (50) intersects the central axis (100 to 106, 114) of at least one conveyor path (40, 42, 46) or is disposed centrally between two conveyors.

5. Apparatus according to one of claims 1 to 4, **characterised in that** the diameter of the basic body member (50) corresponds to at least the width of the conveyor path (40, 42, 46).

6. Apparatus according to one of claims 1 to 5, **characterised in that** the number of guide means (60 to 70, 74) corresponds substantially to the number of pairs of conveyors forming the conveyor paths.

7. Apparatus according to one of claims 1 to 6, **characterised in that** the side (122) of the guide means (68, 74) facing the basic body member (50), when viewed with respect to the tangential position of the guide means (68, 74), is arcuate.

8. Apparatus according to one of claims 1 to 7, **characterised in that** the radius of curvature of the guide means (68, 74) corresponds to the radius of curvature of the basic body member (50).

9. Apparatus according to one of claims 1 to 8, **characterised in that** the sides (130) of the guide means (68) remote from the basic body member (50), when viewed with respect to the tangential position of the guide means, are substantially rectilinear.

## Revendications

1. Dispositif (10, 11, 13) destiné à amener, évacuer et dévier des objets, comprenant une voie de transport (40, 42, 46) formée par une paire de convoyeurs (30, 36, 39) comportant un convoyeur aller et un convoyeur retour, un corps de base (50) en forme de disque, dont la surface de travail peut être disposée à la hauteur des convoyeurs de la paire de convoyeurs et qui peut tourner autour d'un axe, ainsi qu'au moins un aiguillage (64, 68, 74) pouvant pivoter et déterminant le sens de transport des objets, le corps de base (50) étant conçu de telle sorte que des objets transférés par le convoyeur aller peuvent parvenir sur le corps de base tournant, où ils tournent autour de l'axe jusqu'à ce que l'aiguillage s'engage presque radialement dans la surface de travail du corps de base et évacue l'objet, **caractérisé en ce qu'**il est prévu un convoyeur supplémentaire (38) ou une voie de transport supplémentaire formée par une paire de convoyeurs supplémentaire (32), dont l'entrée est associée à cet aiguillage (64, 68, 74), de telle sorte que l'objet soit évacué sur ce convoyeur supplémentaire ou cette voie de transport supplémentaire lorsque l'aiguillage s'engage dans la surface de travail du corps de base, et **en ce que** l'objet est acheminé en retour en passant par le corps de base vers le convoyeur retour de la voie de transport initiale (40, 42, 46), lorsque l'objet ne doit pas être transporté sur un convoyeur supplémentaire et que, de ce fait, l'aiguillage est dans sa position de travail tangentielle.

2. Dispositif selon la revendication 1, **caractérisé en ce que** l'axe (52, 54, 58) du corps de base (50) est parallèle à l'axe de pivotement (80 à 94) de l'aiguillage (64, 68, 74).

3. Dispositif selon la revendication 1 ou 2, **caractérisé en ce que** les axes (52, 54, 58) sont orientés verticalement et sont disposés à une distance donnée les uns des autres, les axes de pivotement (84, 88, 94) étant disposés à l'extérieur du corps de base (50).

4. Dispositif selon l'une quelconque des revendications 1 à 3, **caractérisé en ce que** l'axe (52, 54, 58) du corps de base (50) coupe l'axe médian (100 à 106, 114) d'au moins une voie de transport (40, 42, 46) ou est disposé au milieu entre deux convoyeurs.

5. Dispositif selon l'une quelconque des revendications 1 à 4, **caractérisé en ce que** le diamètre du corps de base (50) correspond au moins à la largeur de la voie de transport (40, 42, 46).

6. Dispositif selon l'une quelconque des revendications 1 à 5, **caractérisé en ce que** le nombre d'aiguillages (60 à 70, 74) correspond pratiquement au nombre de paires de convoyeurs formant les voies de transport.

7. Dispositif selon l'une quelconque des revendications 1 à 6, **caractérisé en ce que** la face (122) de l'aiguillage (68, 74) orientée vers le corps de base (50), lorsque l'aiguillage (68, 74) est en position tangentielle, est une face courbe.

8. Dispositif selon l'une quelconque des revendications 1 à 7, **caractérisé en ce que** le rayon de courbure de l'aiguillage (68, 74) correspond au rayon de courbure du corps de base (50).

9. Dispositif selon l'une quelconque des revendications 1 à 8, **caractérisé en ce que** les faces (130) opposées au corps de base (50), lorsque l'aiguillage est en position tangentielle, sont des faces à peu près rectilignes.
